Europäisches Patentamt

(19) European Patent Office

Office européen des brevets

(11) Publication number: **0 082 460**
**B1**

(12) **EUROPEAN PATENT SPECIFICATION**

(45) Date of publication of patent specification: **24.10.84**

(51) Int. Cl.³: **A 23 L 1/22**

(21) Application number: **82111560.7**

(22) Date of filing: **13.12.82**

(54) **Preparation of flavorant capsules.**

(30) Priority: **21.12.81 US 333172**

(43) Date of publication of application:
**29.06.83 Bulletin 83/26**

(45) Publication of the grant of the patent:
**24.10.84 Bulletin 84/43**

(84) Designated Contracting States:
**AT BE CH DE FR GB IT LI NL SE**

(56) References cited:
**DD-A- 146 244**
**DE-A-2 444 677**
**US-A-3 860 734**
**US-A-4 232 047**

(73) Proprietor: **SOCIETE DES PRODUITS NESTLE S.A.**
**Case postale 353**
**CH-1800 Vevey (CH)**

(72) Inventor: **Anderson, Charles Hal**
**708 Grove Street**
**Marysville, Ohio 43040 (US)**
Inventor: **Liu, Richard Tien-Szu**
**6855 Downs Street**
**Worthington, Ohio 43085 (US)**
Inventor: **Nickerson, Winston R.**
**17225 Waldo Road**
**Marysville, Ohio 43040 (US)**

Courier Press, Leamington Spa, England.

## Description

The present invention is concerned with the preparation of capsules in which there are contained aromatic and/or flavour components of a food material.

In the preparation of various food products, for example powdered instant soups, cold drinks or instant desserts, the desirability of retaining the flavour and/or aromatic constituents of these foods for a considerable length of time without their loss or deterioration until the food product is consumed has long been recognized.

Thus, essential oils are widely used as flavouring and scenting materials in the preparation of various consumer products. However, because of the extreme sensitivity of these oils to heat, light, air and moisture, it has been very difficult to preserve the fresh aroma and flavour of the oils in various products.

Similarly, other natural and synthetic flavours which consist of various combinations of substances such as alcohols, aldehydes, ketones and esters, are highly volatile liquids and are also extremely sensitive to oxidation. Because of their volatility, many of these extracts lose flavour and/or aroma on storage, and being liquid they do not readily lend themselves for combination with solids or powders.

According to the present invention, a process for preparing flavorant capsules comprises coating frozen particles of an aqueous flavouring solution with a water soluble powdered protein and/or carbohydrate wall material having a particle size below 250 μm and a moisture content of 1.5 to 8% by weight and collecting the resultant capsules.

Capsules prepared by the process of the present invention may have a variety of dimensions ranging from an average diameter of 250—600 μm up to about 2.0—3.5 mm and have a wall thickness in the range of from about 20 to 400 μm. Analyses of these capsules have demonstrated that they have highly impervious walls which is an essential prerequisite for long term aroma and flavour retention. The capsules maintain their integrity and retention of the encapsulated material for about twelve months without any apparent degradation of quality.

The aqueous flavouring solution may for example comprise flavouring and/or aromatic substances derived from fruit, meat, fish, seafood, herbs, spices and/or vegetables which may be natural, nature-identical or artificial. Distillates of tea, coffee and cocoa may also be employed.

In order to obtain capsules having desirably hardened, continuous impervious shells, the protein and/or carbohydrate wall material should preferably possess a number of specific characteristics. Firstly the wall material passes through a 250 μm screen, and most preferably the dimensions of the wall material powder particles should range from 60 μm to 150 μm.

Secondly, in · addition to being finely powdered, the particles should advantageously also be irregular in shape. Thus, material that has been spray dried or which is inherently spherical, is not desirable and should first be ground to obtain irregularly shaped particles. Such particles provide more contact points, i.e., greater surface area for contact with the frozen core material particles.

Thirdly, the wall material should also be relatively dry to be able to absorb the moisture from the core material which is required to form the outer shell. The moisture content is in the range of from 1.5 to 8.0% by weight and is preferably less than 3% by weight.

In addition, the wall material should also be readily soluble in cold and hot water. This characteristic is important not only to provide for easy release of the encapsulated flavour and/or aromatic substances but is also important for the formation of the capsule itself.

The wall material should also be free flowing and capable of being agitated without lumping or sticking. Moreover, it should desirably also have the property, after wetting and drying, of forming a glassy-like structure thereby providing an essentially impervious shell about the core material.

Generally, the wall materials that may be employed include one or more of an edible protein material, an edible carbohydrate material and an edible material comprised of both proteins and carbohydrates. Typically, such materials may include tomato solids, corn syrup solids, modified food starch, maltodextrin, corn dextrin, enzymatically hydrolyzed cereals, gums; water soluble proteins such as casein and whey proteins.

In preparing the capsules, the frozen particles added to powdered wall material where, by controlling the rate of thawing, the aqueous core dissolves the surrounding wall material forming a hardened shell, having impregnated therein the flavour and/or aromatic constituents originally contained in the aqueous solution and a hollow interior.

The particulated frozen aqueous core material may be formed in a number of different ways. In one alternative, the aqueous solution of core material is sprayed by a pump inside a tower maintained at a temperature cold enough to freeze the aqueous core. Generally, the temperature is maintained in the range of from about −190° to −10°C, and preferably is less than about −40°C. The aqueous solution is sprayed in an upward direction inside the tower. As the stream reaches its highest point, it breaks into small droplets. The droplets then travel downwards and freeze before reaching the collector at the bottom. The frozen particles are then sprinkled into a well-agitated bed of powdered wall material and then cured until the capsules are formed. "Curing" simply means that the capsules remain in contact with the wall material for a period of time sufficient to allow the capsules wall to set.

In an alternative technique, the aqueous core material is frozen as a slab by means of, for example, a chilled conveyor belt. The frozen slab is then ground to a desired size that will correspond to the ultimate capsule size. Advantageously, the ground frozen particles are tempered so as to eliminate any sharp corners which might undesirably affect capsule formation. Tempering may be accomplished by stirring the particles in a jacketed container or by letting the frozen particles free-fall in a warm environment for a short time. The tempered particles are then added to powdered wall material as above. A humectant such as glycerol or propylene glycol may be added to the core material so as to aid in prolonging the shelf life of the capsules.

The finished capsules may be added to various food products, usually at a level of 0.01 to 10% by weight, depending upon the desired intensity of flavour and/or aroma that is to be imparted to the food product and the flavour and/or aromatic strength of the particular capsules.

The capsules produced according to the present invention will have a shelf-life of about twelve months. During that time, an intact capsule will have essentially no aroma of its own. It is not until the capsule is contacted with either hot or cold liquid such as water (or actually physically broken) that a burst of aroma (with or without flavorant) is given off. Depending upon the particular wall material employed, the size of the capsule and the temperature of the water, the dissolution of the capsules may take anywhere in the range of from about 2 seconds to about 2 minutes. While encapsulated, the flavour and/or aromatic constituents are effectively protected from the environment against deteriorating influences and are not released until desired.

The following Examples, in which ratios and percentages are by weight, are given only for the purpose of illustrating the invention.

Example 1
A core formulation is prepared employing 500 grams of tea essence alone. The tea essence is placed in a pan which is immersed in a dry-ice bath maintained at a temperature of about −80°C for two hours.

The frozen slab of tea essence is then ground in a grinder and then sifted on 2.0 mm and 0.6 mm sieves. The particles (between 0.6 mm and 2.0 mm) are then tempered by constantly stirring these particles to smooth their sharp edges. The tempered particles are then sprinkled, employing a sifter, into a mixing pan coater containing 4.5 kg of solubilized tea tannins employed as the wall material having a particle size of about 100 μm. The mixture is allowed to tumble for 24 hours to complete the curing step.

300 grams of capsules are produced having a dimension of about 0.6 to 2.5 mm. The tea flavoured capsules are then employed in the preparation of an instant tea powder in an amount of 1.5% by weight. These capsules remain intact and do not release the tea essence flavour or aroma until either hot or cold water is added thereto.

Example 2
Example 1 is repeated with the only exception being that instead of tempering the frozen particles in the manner set forth, the ground frozen particles are exposed to a water vapour mist which smoothes the sharp edges of the particles.

Example 3
A core material consisting of lemon oil and concentrated lemon juice is upwardly sprayed in a tower against a stream of cold air having a temperature of about −100°C and flowing at a rate of about 35 metres per minute. Frozen particles having a dimension of about 0.6 to 1.7 mm are collected at the bottom of the tower and are sprinkled into a rotating drum containing 100% chicory. The capsules produced have a dimension of 0.6 to 2.0 mm and may be employed in lemonade in an amount of from 0.15 to 0.25% by weight or in a lemon-flavoured iced-tea mix in an amount of from 0.05 to 0.15% by weight.

The capsules produced are fully intact and completely sealed and do not release the lemon aroma and flavour until contacted with either hot or cold water.

**Claims**

1. A process for producing flavorant capsules which comprises coating frozen particles of an aqueous flavouring solution with a water soluble powdered edible protein material and/or carbohydrate wall material having a particle size below 250 μm and a moisture content of 1.5 to 8% by weight and collecting the resultant capsules.

2. The process of claim 1, wherein the frozen particles are formed by spraying droplets of the aqueous flavouring solution into a cold temperature zone maintained at a temperature sufficiently cold to freeze the droplets.

3. The process of claim 2, wherein the temperature in the cold temperature zone is in the range of from about −190°C to −10°C.

4. The process of claim 1, wherein the frozen particles of the aqueous flavouring solution are formed by freezing the solution as a slab, grinding the slab into particles and then tempering the particles.

5. The process of claim 1, wherein the capsules are in the range of from 250 μm to 3.5 mm in size.

6. The process of claim 1, wherein the aqueous flavouring solution comprises flavouring and/or aromatic substances derived from fruit, meat, fish, seafood, herbs, spices and/or vegetables.

7. The process of claim 1, wherein the powdered edible material has an average particle size of from 60 μm to 150 μm.

8. The process of claim 1, wherein capsules having a wall thickness of 20 to 400 μm are collected.

## Patentansprüche

1. Ein Verfahren zur Herstellung von Aromakapseln, welches das Überziehen gefrorener Teilchen einer Wässerigen Aromalösung mit einem wasserlöslichen, pulverförmigen, geniessbaren Proteinmaterial und/oder Kohlenhydratwandmaterial mit einer Teilchengrösse unterhalb 250 Mikrometer und einem Feuchtigkeitsgehalt von 1,5 bis 8 Gew.-% und das Abtrennen der entstandenen Kapseln umfasst.

2. Das Verfahren der Anspruchs 1, worin die gefrorenen Teilchen durch Versprühen von Tröpfchen der wässerigen Aromalösung in eine Kalttemperaturzone, die bei einer für das Gefrieren der Tröpfchen ausreichend kalten Temperatur gehalten wird, gebildet werden.

3. Das Verfahren des Anspruchs 2, worin die Temperatur in der Kalttemperaturzone im Bereich von etwa −190°C bis −10°C liegt.

4. Das Verfahren des Anspruchs 1, worin die gefrorenen Teilchen der wässerigen Aromalösung durch Gefrieren der Lösung als eine Platte, mahlen der Platte zu Teilchen und anschliessendes Tempern der Teilchen gebildet werden.

5. Das Verfahren des Anspruchs 1, worin die Kapseln eine Grösse im Bereich von 250 Mikrometer bis 3,5 Millimeter haben.

6. Das Verfahren des Anspruchs 1, worin die wässerige Aromalösung, Aroma und/oder Riechstoffe enthält, die aus Früchten, Fleisch, Fisch, Meeresfrüchten, Kräutern, Gewürzen und/oder Gemüsen stammen.

7. Das Verfahren des Anspruchs 1, worin das pulverförmige, geniessbare Material eine mittlere Teilchengrösse von 60 Mikrometer bis 150 Mikrometer hat.

8. Das Verfahren des Anspruchs 1, worin Kapseln mit einer Wanddicke von 20 bis 400 Mikrometer abgetrennt werden.

## Revendications

1. Procédé de production de capsules de substances d'assaisonnement, qui consiste à revêtir des capsules congelées d'une solution aqueuse d'assaisonnement, d'une matière protéinique comestible hydrosoluble en poudre et/ou d'une matière glucidique de revêtement, en particules inférieures à 250 micromètres et ayant une teneur en humidité de 1,5 à 8% en poids, et à recueillir les capsules sultantes.

2. Procédé suivant la revendication 1, dans lequel les particules congelées sont formées par pulvérisation de gouttelettes de la solution aqueuse d'assaisonnement dans une zone froide maintenue à une température suffisamment basse pour congeler les gouttelettes.

3. Procédé suivant la revendication 2, dans lequel la température qui règne dans la zone froide se situe dans l'intervalle d'environ −190°C à −10°C.

4. Procédé suivant la revendication 1, dans lequel les particules congelées de la solution aqueuse d'assaisonnement sont formées par congélation de la solution en une barre, broyage de la barre en particules puis réchauffement modéré des particules.

5. Procédé suivant la revendication 1, dans lequel le diamètre des capsules se situe dans l'intervalle d'environ 250 micromètres à 3,5 mm.

6. Procédé suivant la revendication 1, dans lequel la solution aqueuse d'assaisonnement comprend des substances condimentaires et/ou aromatiques dérivées de fruits, de viande, de poisson, de produits de la mer, d'herbes, d'épices et/ou de légumes.

7. Procédé suivant la revendication 1, dans lequel la matière comestible en poudre a un diamètre moyen de particules de 60 micromètres à 150 micromètres.

8. Procédé suivant la revendication 1, dans lequel on recueille des capsules ayant une épaisseur de paroi de 20 à 400 micromètres.